Europäisches Patentamt

European Patent Office

Office européen des brevets

(19)

(11) Numéro de publication : **0 143 687**
**B1**

(12) **FASCICULE DE BREVET EUROPÉEN**

(45) Date de publication du fascicule du brevet :
**20.01.88**

(51) Int. Cl.⁴ : **G 01 D   5/28**

(21) Numéro de dépôt : **84402136.0**

(22) Date de dépôt : **24.10.84**

(54) **Système de repérage de la position angulaire d'un dispositif mécanique.**

(30) Priorité : **27.10.83 FR 8317136**

(43) Date de publication de la demande :
**05.06.85 Bulletin 85/23**

(45) Mention de la délivrance du brevet :
**20.01.88 Bulletin 88/03**

(84) Etats contractants désignés :
**DE GB IT NL SE**

(56) Documents cités :
**CA-A- 1 007 494**
**US-A- 4 127 781**
**US-A- 4 395 123**
**TECHNISCHES MESSEN, vol. 46, no. 6, juin 1979, pages 249-254, Munich, DE; W. SCHULZ: "Optoelektronische Messverfahren mit Doppeldioden"**
**SOVIET INSTRUMENTATION AND CONTROL JOURNAL, no. 8, août 1971, pages 32-35, Oxford, GB; A.P. GRAMMATIN et al.: "Measuring instruments with a light-beam pointer and a flat scale"**

(73) Titulaire : **SAT Société Anonyme de Télécommunications**
**41, rue Cantagrel**
**F-75624 Paris Cedex 13 (FR)**

(72) Inventeur : **Claret de Fleurieu, Bertrand Michel**
**41, rue Cantagrel**
**F-75631 Paris Cédex 13 (FR)**
Inventeur : **Couderc, Jean-Pierre Lucien**
**41, rue Cantagrel**
**F-75631 Paris Cédex 13 (FR)**
Inventeur : **Lonnoy, Jacques Jean**
**41, rue Cantagrel**
**F-75631 Paris Cédex 13 (FR)**

(74) Mandataire : **Bloch, Robert et al**
**6, rue du Faubourg Saint-Honoré**
**F-75008 Paris (FR)**

EP 0 143 687 B1

## Description

La présente invention concerne un système de repérage de la position angulaire d'un dispositif mécanique susceptible d'être animé d'un mouvement de rotation, comportant un miroir solidaire du dispositif mécanique, une source de lumière et des moyens pour éclairer le miroir à travers une fente de largeur prédéterminée, un récepteur semi-conducteur comprenant une barrette d'éléments photosensibles et agencé pour recevoir l'image de la fente réfléchie par le miroir et en déduire la position angulaire du dispositif mécanique par l'intermédiaire d'un dispositif de traitement de données.

Des systèmes de repérage de position angulaire d'un dispositif mécanique susceptible d'être animé d'un mouvement de rotation autour d'un axe de rotation sont déjà connus.

Par exemple, on connaît les potentiomètres, les codeurs incrémentaux, les codeurs absolus digitaux, les capteurs capacitifs, les capteurs inductifs ou résolvers. Ces divers capteurs présentent tous l'inconvénient de rajouter une inertie sur la ligne d'arbre de rotation, cette inertie augmentant en général considérablement avec la précision. Les potentiomètres sont, en outre, sujets à usure, le frottement du curseur érodant inévitablement la piste résistive. Les capteurs capacitifs sont, eux, limités aux très faibles débattements angulaires.

On connaît aussi un système du type mentionné ci-dessus, notamment par le brevet US-A-4 127 781.

Toutefois, compte tenu des performances des dispositifs du commerce, la vitesse angulaire maximale du miroir qui est admissible est insuffisante dans les techniques de repérage actuelles, si bien qu'il arrive souvent que plusieurs (n) éléments photosensibles de la barrette soient éclairés pendant le temps d'intégration $\Delta t$, ou le temps de transfert de charges.

Par ailleurs, dans le registre à décalage, ou de transfert, des dispositifs à transfert de charges, les transferts s'effectuent toujours dans le même sens, c'est-à-dire du rang N vers le rang N — 1 et ainsi de suite jusqu'au rang 1 le plus proche de la sortie. Donc, le premier élément détecté en sortie du registre à décalage peut être, soit celui qui a été éclairé au début du temps $\Delta t$, soit celui qui a été éclairé à la fin de ce temps, selon le sens de déplacement du miroir M. Comme le mouvement du miroir se superpose à ce transfert de charges, ce transfert pouvant être plus ou moins long suivant la position des n éléments éclairés, la mesure fournie par le récepteur semi-conducteur fournit un résultat susceptible d'être entaché d'une incertitude. Ce retard de phase est d'autant plus gênant qu'il varie avec la position, la vitesse et le sens de déplacement du miroir.

La présente invention vise donc à pallier ces inconvénients.

A cet effet, la présente invention concerne un système du type mentionné ci-dessus, caractérisé par le fait que le récepteur comprend une barrette de cellules photosensibles et un dispositif à couplage de charges et il est prévu des moyens de correction de la lecture de la mesure fournie par le récepteur, comportant des moyens pour mémoriser deux adresses I et J fournies par le récepteur et correspondant à deux éléments du récepteur éclairés à deux instants séparés d'un temps d'intégration $\Delta t$ déterminé par le récepteur, et une mémoire morte adressable par les adresses I et J mémorisées, ladite mémoire morte ayant été préprogrammée pour apporter les corrections des paramètres appropriés.

Ainsi, le système de l'invention permet d'obtenir une précision et une linéarité excellentes, sans accroître notablement l'inertie de l'équipage mobile. Le système de l'invention vise à s'affranchir de l'usure.

D'autres avantages et caractéristiques de l'invention apparaîtront à la lecture de la description suivante, illustrée par les dessins annexés.

La figure 1a est un schéma général du dispositif de repérage de l'invention ;

la figure 1b est une vue de dessus du récepteur du dispositif de la figure 1a ;

la figure 2 est un schéma du dispositif de traitement de l'information recueillie par le dispositif de la figure 1 ;

la figure 3a est une illustration de l'écart angulaire d$\sigma$ lorsque le faisceau lumineux se déplace sur le récepteur de la figure 1b, et

la figure 3b est une illustration de l'angle maximal balayé par le faisceau lumineux détectable par le récepteur de la figure 1b.

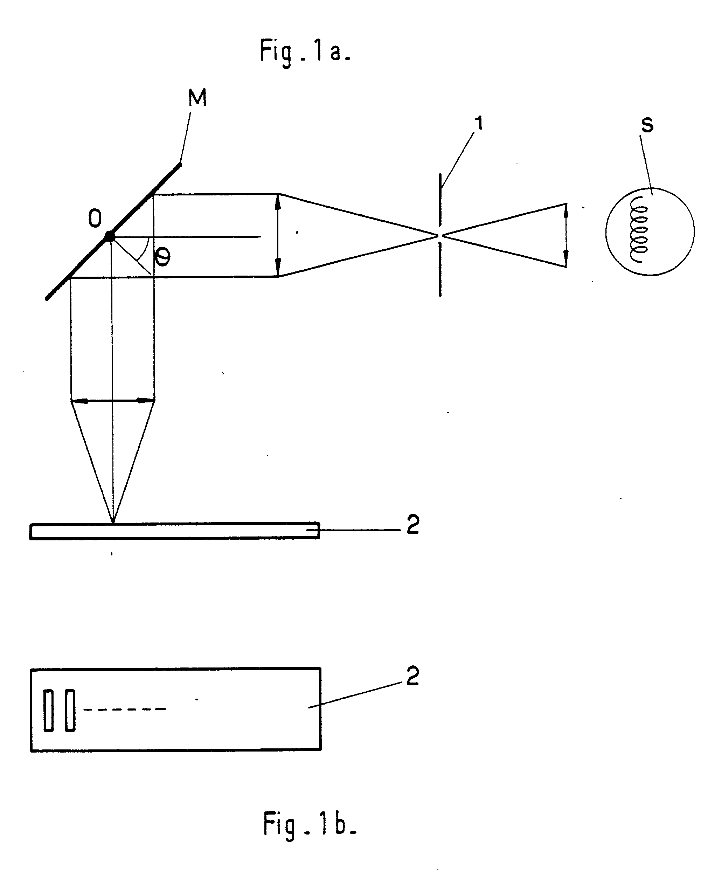

La figure 1a représente le schéma général du dispositif de repérage de position angulaire de l'invention. Soit P un dispositif mécanique dont on veut connaître la position angulaire. On dispose, sur ce dispositif P, un miroir M solidaire de ce dispositif P et susceptible de recopier ses déplacements. Soit S une source de lumière blanche, ou monochromatique, une fente 1 étant placée devant cette source de lumière. On éclaire la pièce mécanique P que l'on souhaite repérer en la plaçant sur le trajet de la lumière transmise par la fente. La lumière réfléchie par le dispositif mécanique P, ou plus exactement par le miroir M porté par cette pièce mécanique P, est recueillie sur un dispositif de réception 2. On utilise avantageusement pour dispositif de réception 2 un dispositif semi-conducteur formé d'une barrette d'éléments photosensibles. La figure 1b représente une vue de dessus de cette barrette d'éléments photosensibles.

On connaît déjà, dans l'état de la technique, des détecteurs photosensibles utilisant un dispositif à couplage de charge (encore appelé CCD). De tels détecteurs se composent d'un substrat semi-conducteur, d'un certain nombre N de surfaces de détection ou éléments formés sur le substrat, d'un registre à décalage dont la dimension est fonction du nombre d'éléments, placé dans la direction de balayage, ledit registre permettant le transfert des charges stockées vers la sortie. On utilise un système optique de focalisation, par exemple des lentilles, permettant d'obtenir l'image de la fente source sur la barrette d'éléments photosensibles. Soit $\alpha$ la largeur de la fente 1. On utilise une barrette dont les éléments photosensibles sont espacés de $\alpha$ et telle que la largeur de chaque élément soit supérieure à la zone aveugle entre deux éléments. La largeur de la fente 1 étant égale à $\alpha$, un seul élément reçoit de la lumière (parfois deux cellules voisines si l'image de la fente tombe entre les deux). Donc, si le miroir, ou la pièce mécanique, est fixe, le rang de l'élément éclairé est caractéristique de la position du miroir à $\alpha/2$ près. Les charges accumulées dans chaque élément en réponse aux informations lumineuses, sont transférées à intervalles de temps $\Delta t$ réguliers dans le registre à décalage puis acheminées en série vers la sortie où elles sont converties en tension. Soit $f_0$ la cadence de sortie pour pouvoir lire en série l'état présenté par tous les éléments du dispositif semi-conducteur 2 au moment d'un transfert ; il faut bien évidemment que la relation $N/f_0 \leqslant \Delta t$ soit réalisée.

Dans la suite de la description, on le supposera.

Le rang de l'élément éclairé peut donc être connu par comptage du nombre de décalages nécessaires pour voir apparaître en sortie la tension représentative de l'élément éclairé. La linéarité d'une telle mesure est fonction du nombre N d'éléments composants la barrette 2 et de l'angle maximum $\theta_{max}$ que l'on est amené à mesurer par rapport à la position médiane. Le calcul de l'écart angulaire $d\theta$ correspondant à un déplacement du faisceau de $\alpha/2$ sur la barrette 2 peut s'exprimer, en fonction de l'angle $\theta$ lui-même, de la largeur $\alpha$ de la fente et de la distance f focale du système optique de réception, par la relation :

$$\text{tg } 2\,\theta_{max} = \frac{N}{2}\frac{\alpha}{f}$$

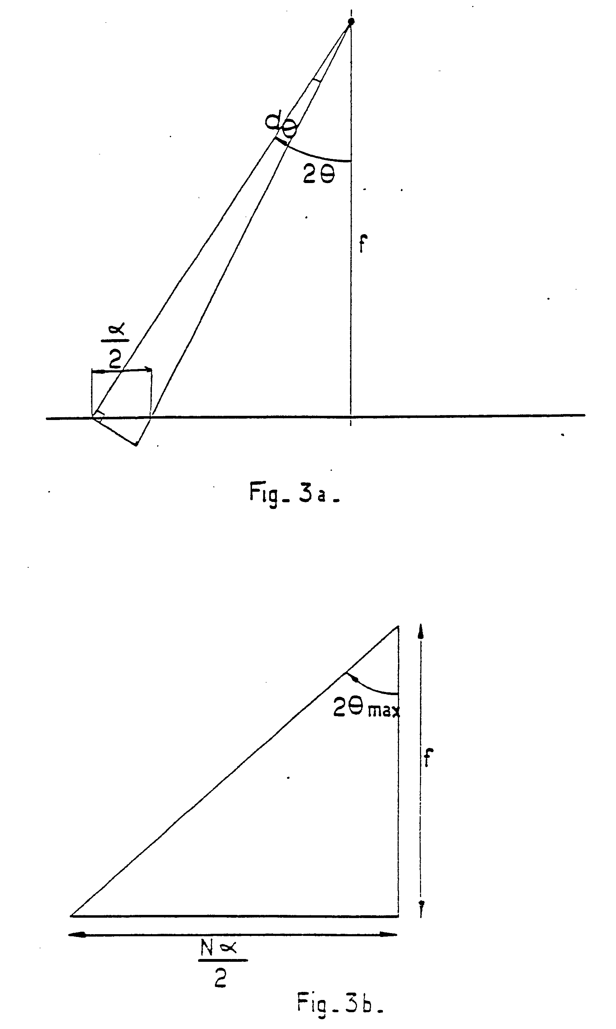

comme représenté sur la figure 3b. La linéarité s'exprime par

$$\frac{d\theta_{max}}{\theta_{max}}$$

soit :

$$\frac{d\theta_{max}}{\theta_{max}} = \frac{\text{tg } 2\,\theta_{max}}{N\theta_{max}}$$

La zone angulaire totale dans laquelle on peut connaître la position d'un miroir s'étend sur environ 90°, ce qui correspond à une valeur de $\theta_{max}$ inférieure à 45°.

Toutefois, si la pièce mécanique P, et dont le miroir M, subit des mouvements angulaires, il n'est pas aussi simple d'établir une corrélation entre la position de la pièce, un des éléments de détection et la tension lue en sortie. En effet, si la fréquence $f_0$ admissible par le dispositif semi-conducteur de réception 2 est suffisamment élevée, on peut choisir un temps d'intégration $\Delta t = N/f_0$ suffisamment court pour que le faisceau ne puisse pas, pendant ce temps $\Delta t$, se déplacer d'un angle supérieur à $d\theta_{max}$ compte tenu des vitesses mises en jeu dans le dispositif mécanique. Dans un tel cas, le fonctionnement dynamique est aussi simple qu'en statique. La vitesse angulaire maximale admissible pour le miroir est alors telle que :

$$V_{max}\,\Delta t \leqslant \frac{d\theta_{max}}{2} \quad \text{d'où} \quad V_{max}\,\frac{d\theta_{max}}{2\,\Delta t} = \frac{f_0\,\text{tg } 2\,\theta_{max}}{2\,N^2}$$

Malheureusement, une telle limitation est insuffisante pour les techniques de repérage actuelles compte tenu des performances des circuits à transfert de charge disponibles dans le commerce et, bien souvent, lorsque le miroir M est en mouvement, un nombre n d'éléments est éclairé pendant le temps $\Delta t$.

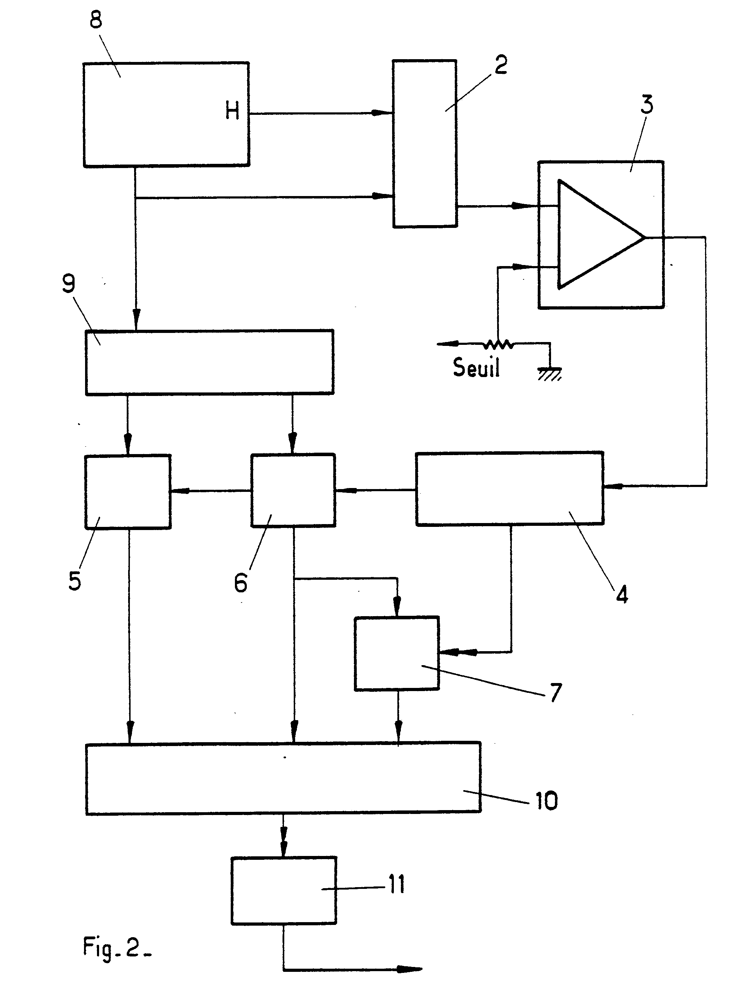

L'invention vise à pallier de tels inconvénients en disposant un système de correction comme représenté sur la figure 2.

Ce dispositif de correction reçoit le signal de sortie du registre à décalage du dispositif de réception 2 de la figure 1. Ce dispositif de correction comprend un comparateur 3 qui reçoit une commande à seuil sur une entrée et le signal de sortie du registre à décalage sur l'autre entrée et fournit en sortie un signal représentatif de l'adresse de l'élément éclairé, sous la forme d'une tension. Ce signal issu du comparateur 3 est appliqué à l'entrée d'un circuit de commande 4 qui fournit un ordre, d'une part, à l'entrée de mémoires vives 5 et 6, et, d'autre part, à l'entrée d'une autre mémoire vive 7. La mémoire vive 7 met en mémoire la mesure précédente I, tandis que les mémoires vives 5 et 6 mettent en mémoire la dernière mesure J entrante ; la mesure J est l'adresse du dernier élément éclairé de la barrette 2 et la mesure I est l'adresse de l'avant-dernier élément éclairé de la barrette 2.

On dispose un générateur de signaux d'horloge 8 qui fournit le signal de lecture du registre à l'entrée du dispositif de réception 2 ainsi que le signal d'avance d'un compteur 9 fournissant huit bits en parallèle.

C'est ce compteur 9 qui fournit deux groupes de quatre bits à l'entrée des mémoires 5 et 6, respectivement, et représentant les bits d'adresse de poids fort et de poids faible, respectivement.

Le contenu des adresses des mémoires 5, 6 et 7 est appliqué à l'entrée d'une mémoire morte 10. Cette mémoire 10 reçoit donc 12 bits d'adresse et fournit en sortie huit bits de données représentatifs de la position angulaire corrigée. Plus exactement, ces huit bits sont appliqués à un convertisseur numérique analogique 11 qui fournit en sortie une recopie analogique du signal. On notera que seuls les quatre bits de poids faible sont mémorisés dans la mémoire vive 7. En effet, lors du repérage entre une position I et une position J, l'adresse n'a pas subi de modification trop importante si bien que la mémorisation des bits de poids faible suffit, puisque les vitesses sont suffisamment faibles pour que, connaissant J et les 4 bits de poids faible de la position I, on connaisse sans ambiguïté I et J.

Il suffit donc de préprogrammer la mémoire 10 pour apporter à la mesure du repérage toutes les corrections nécessaires. Cette mémoire morte 10 est, par exemple, une mémoire EPROM 2 732 de la Société Intel. Il suffit de choisir les principales corrections que l'on souhaite apporter à la lecture de chaque mesure. Il s'agit avantageusement de la correction de vitesse, les corrections de distorsion du système optique de focalisation des pinceaux lumineux, la correction de non linéarité due à l'effet de tangente. On trouvera à la fin de cette description la forme préférée du programme de la mémoire 10 proposée par la demanderesse, rédigée en FORTRAN.

Pour ce qui concerne la correction de vitesse, la mesure de I et J fournit une précision convenable. En effet, considérons un temps d'intégration de la lumière qui dure de l'instant $t_0$ à l'instant $t_0 + \Delta t$ ; la tension de sortie caractéristique d'un élément éclairé apparaît à l'instant :

$$t_0 + \Delta t + \frac{J}{f_0}$$

Soit $t_m$ cet instant de mesure correspondant à l'élément éclairé J. Pour la période d'intégration précédente, de $t_0 - \Delta t$ à $t_0$, le premier élément éclairé était le $I^e$ ce qui correspond à l'instant de mesure $t_0 + I/f_0$. Si $\Delta t$ est suffisamment court pour que la vitesse ne change pas notablement entre $t_0 - \Delta t$ et $t_0 + \Delta t$ la connaissance de I et J permet de connaître la position exacte du miroir à l'instant $t_m$. En effet, la vitesse angulaire $V_0$ à l'instant $t_0$ s'exprime en fonction de l'angle du faisceau lumineux avec la perpendiculaire du miroir M pendant les deux positions I et J par :

$$V_0 = \frac{\theta(J) - \theta(I)}{\Delta t}$$

Le nombre n d'éléments éclairés pendant le temps $\Delta t$ est donc $|J - I|$. Si J est inférieur ou égal à I, le faisceau lumineux se déplace vers les éléments proches de la sortie, et J est donc bien la cellule éclairée à l'instant $t_0 + \Delta t$. Par contre, si J est supérieur à I, J est la cellule éclairée à l'instant $t_0$ et à l'instant $t_0 + \Delta t$ c'est la J + $|J - I|$ qui est éclairée. Dans les deux cas, la position du miroir à l'instant $t_m$ de la mesure peut être estimée de la façon suivante :

$$\theta(t_m) = \theta(J) + \frac{J}{f_0} V_0 \qquad \text{si} \quad J \leqslant I$$

$$\theta(t_m) = \theta(2J - I) + \frac{J}{f_0} V_0 \quad \text{si} \quad J > I$$

La condition restrictive sur la vitesse du miroir fait donc place à une condition sur l'accélération beaucoup moins restrictive en pratique. En effet, pour conserver la résolution du fonctionnement statique il faut que dans les deux cas $J/f_0 \Delta V < d\theta_{min}$ où $\Delta V$ est la variation de vitesse angulaire pendant le temps $\Delta t$. Le cas le plus défavorable correspond à J = N où N est le nombre total d'éléments, de cellules, de détection soit :

$$\frac{N}{f_0} \Delta V \leqslant \frac{d\theta_{min}}{2}$$

L'angle maximum $\theta_{max}$ détectable par les éléments du dispositif semi-conducteur 2 est tel que tg $2\theta_{max} = (N/2)(\alpha/f)$ où f est la distance focale du système optique comme représenté sur la figure 3b.

D'autre part, comme représenté sur la figure 3a, on exprime $d\theta$ en fonction de l'angle $\theta$ dont le miroir a tourné. Lorsque le miroir tourne de $\theta$, le faisceau réfléchi tourne de $2\theta$ donc l'angle $d\theta$ sur le récepteur semi-conducteur 2 correspondant à un déplacement du faisceau de $\alpha/2$ s'exprime par :

$$d\theta = \frac{\alpha}{2} \cos 2\theta \frac{\cos 2\theta}{f} = \frac{\alpha}{2f} \cos^2 2\theta$$

Dans l'expression $d\theta$, on peut donc remplacer $\alpha/2f$ par tg $2\theta_{max}/N$, ce qui fournit, exprimé en

radians

$$d\theta = \frac{\cos^2 2\theta \; tg \; 2\theta_{max}}{N}$$

On voit que $d\theta$ dépend de $\theta$, et est maximum pour $\theta$ égale zéro. On a alors :

$$d\theta_{max} = \frac{tg \; 2\theta_{max}}{N}$$

$d\theta$ est minimum pour $\theta = \theta_{max}$ et s'exprime par :

$$d\theta_{min} = \frac{\sin 2\theta_{max} \cos 2\theta_{max}}{N}$$

On en déduit la condition sur la variation de la vitesse angulaire :

$$\Delta V \leqslant \frac{\sin 2\theta_{max} \cos 2\theta_{max}}{2N^2} f_0$$

On peut donc en déduire une condition restrictive sur l'accélération admissible :

$$\gamma_{max} = \frac{\Delta V}{\Delta t} \; max = \frac{\Delta V}{N} \; max \; f_0$$

Soit encore :

$$\gamma_{max} = \frac{\sin 2\theta_{max} \cos 2\theta_{max}}{2N^3} f_0^2$$

Un tel système de repérage de la position angulaire a été réalisé. En utilisant un récepteur semi-conducteur 2 comportant $N = 256$ éléments, avec une fréquence de lecture $f_0 = 10$ Mhz et en faisant osciller le miroir de $\theta = \pm 10°$ autour de sa position médiane, on a pu obtenir des résultats de façon satisfaisante jusqu'à des vitesses de l'ordre de 105 radians/s et des accélérations de l'ordre de 47 000 radians/s$^2$.

La linéarité obtenue en statique s'exprime par :

$$\frac{d\theta_{max}}{\theta_{max}} = \frac{tg \; 2\theta_{max}}{N\theta_{max}} \quad soit \quad \frac{d\theta_{max}}{2\theta_{max}} < 0,21 \; \%$$

par contre, en dynamique une correction est indispensable car

$$V_{max} = \frac{tg \; 2\theta_{max}}{N^2} f_0 \simeq 28 \; rd/s$$

Or, on peut rencontrer des vitesses de 105 rd/s. De même, l'accélération maximale $\gamma_{max}$ est de l'ordre de $0,9 \times 10^6$ rd/s$^2$ ce qui est largement supérieur à 47 000 rd/s$^2$ à laquelle le miroir est soumis. Les corrections apportées par le système de l'invention se sont donc révélées indispensables et satisfaisantes.

En pratique, le récepteur ayant 256 cellules, la cellule éclairée à chaque cycle de mesure est repérée par un mot de 8 bits. Pour appliquer la correction de vitesse basée sur la connaissance de deux mesures consécutives I et J, il faudrait pouvoir adresser une mémoire de 16 bits d'adresse. Comme il n'en existe pas encore, on se contente d'une mémoire de 12 bits d'adresse en n'adressant que les 4 bits de poids faible du mot antérieur I. Si la vitesse reste inférieure à une certaine limite calculée par le programme de la mémoire, la connaissance des 4 bits de poids faible de I permet, connaissant tous les bits de J, de reconstituer avec certitude les bits de poids fort, de I, I devant être le numéro de la cellule ayant ces bits de poids fort, et étant la plus proche de la cellule J. Ceci est une des opérations faites par le programme. La limitation de vitesse ainsi introduite reste beaucoup moins restrictive que celle qui est imposée lorsqu'on n'effectue aucune correction de vitesse. Lorsque des EPROM de 16 bits d'adresse existeront, cette limitation disparaîtra.

(Voir programme de correction pages 6-8)

**0 143 687**

Programme de correction

```
        DIMENSION XCOF(5)
        BYTE P(4096),Q(4096)
        REAL LAMBDA
200     WRITE (7,100)
100     FORMAT (/1X,' QUELLE EST LA FREQUENCE DE TRANSFERT PREVUE'
       1,' EN MHZ ?:',$)
        READ (7,*,ERR = 200) F0
201     WRITE (7,202)
202     FORMAT(/1X,' A COMBIEN DE TRANSFERTS ELEMENTAIRES CORRESPOND"
       1,' LE TEMPS D INTEGRATION ?',/54X,'(AU MINIMUM 256) :',$)
        READ (7,*,ERR = 201)NT
        IF (NT.LT.256) GO TO 201
3       WRITE (7,20)
20      FORMAT (/1X,' QUELLE SERA LA FOCALE DE L OPTIQUE DE'
       1,' RECEPTION EN mm ?:',$)
        READ (7,*,ERR = 3) FF
4       WRITE (7,30)
30      FORMAT (/1X,' QUEL EST LE PAS DES CELLULES DU CIRCUIT CCD'
       1,' EN MICRONS ?:',$)
        READ (7,*,ERR = 4) ALPHA
5       WRITE (7,40)
40      FORMAT (/1X,' L OPTIQUE A T ELLE DE LA DISTORSION ?'
       1,' (1 = OUI,0 = NON) :',$)
        READ (7,*,ERR = 5) ND
        IF (ND.EQ.0) GO TO 7
        IF (ND.NE.1) GO TO 5
6       WRITE (7,50)
50      FORMAT (/1X,' QUELS SONT LES 5 COEFFICIENTS DE LA LOI'
       1,' De DISTORSION ?:')
        DO 8 I1 = 1,5
8       READ (7,*,ERR = 6) XCOF(I1)
7       WRITE (7,60)
60      FORMAT (/1X,' QUELLE EST LA LONGUEUR D ONDE DE LA SOURCE'
       1,' EN MICRONS ?:',$)
        READ (7,*,ERR = 7) LAMBDA
        DP = 2,44*LAMBDA*FF/ALPHA
        WRITE (7,70) DP,ALPHA
70      FORMAT (/1X,' LE DIAMETRE MINIMUM DE LA PUPILLE EST :',FB.3
       1,' mm',/1X,' POUR UNE TACHE DE DIFFRACTION DE :',F5.1,' MICRONS')
        NMD = ND - 2
        CALL DISTOR (255.,AAK,XCOF,NMD,ALPHA,AT,FF)
        ATD = AT*57.29578!          ATD = AT*180./PI
        WRITE (7,80) ATD
80      FORMAT (/1X,' L ANGLE TOTAL MESURE PAR LE CAPTEUR SERA :'
       1,FB.3,' DEGRES')
        VMAX = 7.EG*SIN(AT)*F0/COS(AT)/512./FLOAT(NT)
        WRITE (7,81) VMAX
81      FORMAT (/1X,' LA VITESSE DU MIROIR NE DEVRA JAMAIS DEPASSER :'
       1,G10.3,' RADIANS/SECONDE')
        GM = SIN(AT)*COS(AT)*F0*F0/FLOAT(NT)*7629394.531
        WRITE (7,90) GM
90      FORMAT (/1X,' L ACCELERATION MAXIMUM PERMISE EST :'
       1,G10.3,' RADIANS/SECONDE/SECONDE')
299     WRITE (7,300)
300     FORMAT (/1X,' VOULEZ VOUS CHANGER LES PARAMETRES ?'
       1,' (1 = OUI,0 = NON) :',$)
        READ (7,*,ERR = 299) NNC
        IF (NNC.EQ.1) GO TO 200
        IF (NNC.NE.0) GO TO 299
301     WRITE (7,302)
302     FORMAT (/1X,' VOULEZ VOUS CREER LE FICHIER ?'
       1,' (1 = OUI,0 = NON) :',$)
READ (7,*,ERR = 301) NFI
```

6

```
        IF (NFI.EQ.0) GO TO 1000
        IF (NFI.NE.1) GO TO 301
        DO 1 I1 = 0,15
        DO 1 I2 = 0,15
        DO 1 I3 = 0,15
        N = I1*256 + I2*16 + I3 + 1
        I0 = I3
        LDK = 12 - I0
        IF (LDK.GE.87 I0 = I0 + 16
        IF (LDK.LT. - B) I0 = I0 - 16
        I = (I1*16) + I0
        J = (I1*16) + I2
        LDK = J - I
            YJ = FLOAT(J)
            CALL DISTOR (YJ,TETA0J,XCOF,ND,ALPHA,AT,FF)
            IF (LDK.NE.0) GO TO 11
            CALL HEXA (TETA0J,P(N),Q(N))
            GO TO 1
11          YI = FLOAT(I)
            CALL DISTOR (YI,TETA0I,XCOF,ND,ALPHA,AT,FF)
            CDR = YJ*(TETA0J - TETA0I)/FLOAT(NT)
            IF (LDK.GT.0) GO TO 12
            TETA = TETA0J + COR
            CALL HEXA (TETA,P(N),Q(N))
            GO TO 1
12          Y = FLOAT((2*J) - I)
            CALL DISTOR (Y,TETA0,XCOF,ND,ALPHA,AT,FF)
            TETA = TETA0 + COR
            CALL HEXA (TETA,P(N),Q(N))
1           CONTINUE
            OPEN (UNIT = 1,NAME = 'DX0:PCCD.DAT',ACCESS = 'DIRECT',
        1RECORDSIZE = 32,TYPE = 'NEW')
            DO 2 I1 = 1,64
            I2 = (64*(I1 - 1)) + 1
            I3 = 64*I1
            WRITE (1'I1) (P(N),Q(N),N = I2,I3)
2           CONTINUE
            CLOSE (UNIT = 1)
1000        CALL EXIT
            END
            SUBROUTINE DISTOR (Y,TETA,XCOF,ND,ALPHA,AT,FF)
            DIMENSION XCOF(5)
            YA = (Y - 127.5)*ALPHA*1.E - 3
            IF ((ND.EQ.0).OR.(ND.EQ. - 2)) GO TO 2
            Y2 = YA*YA
            Y4 = Y2*Y2
            Y6 = Y4*Y2
            YB = Y4*Y4
            DY = XCOF(1) + (XCOF(2)*Y2) + (XCOF(3)*Y4) + (XCOF(4)*Y6)
        1 + (XCOF(5)*Y8)
            Y0 = YA/(1. + DY)
            GO TO 4
2           Y0 = YA
4           R = Y0/FF
            TETA = ATAN(R)
            IF (ND.LT.0) GO TO 3
            IF (TETA.LT. - AT) TETA = AT
            IF (TETA.GT.AT) TETA = AT
            TETA = (TETA*127.5/AT) + 127.5
1           RETURN
3           AT = TETA
        GO TO 1
        END
        SUBROUTINE HEXA (TETA,P,Q)
        BYTE P,Q
```

```
IA = INT(TETA)
IF (IA.GT.255) IA = 255
IF (IA.LT.0) IA = 0
K = 0
        IP = INT(FLOAT(IA)/16.) + 1.E − 3)
        IQ = IA − (IP*16)
        N = IP + 1
1       GO TO (2,3,4,5,6,7,8,9,10,11,12,13,14,15,16,17),N
2       H = 48
        GO TO 18
3       H = 49
        GO TO 18
4       H = 50
        GO TO 18
5       H = 51
        GO TO 18
6       H = 52
        GO TO 18
7       H = 53
        GO TO 18
8       H = 54
        GO TO 18
9       H = 55
        GO TO 18
10      H = 56
        GO TO 18
11      H = 57
        GO TO 18
12      H = 65
        GO TO 18
13      H = 66
        GO TO 18
14      H = 67
        GO TO 18
15      H = 68
        GO TO 18
16      H = 69
        GO TO 18
17      H = 70
18      IF (K.EQ.1) GO TO 19
        K = 1
        P = H
        N = IQ + 1
        GO TO 1
19      Q = H
        RETURN
        END
```

## Revendications

1. Système de repérage de la position angulaire d'un dispositif mécanique susceptible d'être animé d'un mouvement de rotation, comportant un miroir (M) solidaire du dispositif mécanique, une source de lumière (S) et des moyens pour éclairer le miroir à travers une fente (1) de largeur prédéterminée, un récepteur semi-conducteur (2) comprenant une barrette d'éléments photosensibles agencée pour recevoir l'image de la fente réfléchie par le miroir et en déduire la position angulaire du dispositif mécanique par l'intermédiaire d'un dispositif de traitement de données, caractérisé par le fait que le récepteur comprend une barrette de cellules photosensibles et un dispositif à couplage de charges et il est prévu des moyens de correction de la lecture de la mesure fournie par le récepteur, comportant des moyens (6, 7) pour mémoriser deux adresses I et J fournies par le récepteur et correspondant à deux éléments du récepteur éclairés à deux instants séparés d'un temps d'intégration Δt déterminé par le récepteur, et une mémoire morte (10) adressable par les adresses I et J mémorisées, ladite mémoire morte (10) ayant été préprogrammée pour apporter les corrections des paramètres appropriés.

2. Système de repérage selon la revendication 1, caractérisé par le fait que les éléments photosensibles du récepteur sont distants d'une grandeur dépendant de la largeur de ladite fente (1).

3. Système de repérage selon l'une des revendications 1 et 2, caractérisé par le fait que la mémoire morte (10) est préprogrammée pour pallier les distorsions introduites par l'optique du système.

4. Système de repérage selon l'une des revendications 1 à 3, caractérisé par le fait que la mémoire morte (10) est préprogrammée pour pallier la limitation de vitesse angulaire maximale admissible par ledit récepteur.

5. Système de repérage selon l'une des revendications 1 à 4, caractérisé par le fait que la mémoire morte (10) est préprogrammée pour pallier la non linéarité de la mesure due à l'effet de tangente.

6. Système de repérage selon l'une des revendications 1 à 5, caractérisé par le fait que lesdites adresses I et J sont codées au moyen de huit éléments binaires.

7. Système de repérage selon la revendication 6, caractérisé par le fait que l'adresse I de la première mesure est mise en mémoire au moyen de ses quatre éléments binaires de poids faible et l'adresse de la seconde J, et dernière mesure est mise en mémoire au moyen de ses huit éléments binaires.

**Claims**

1. System for registering the angular position of a rotatable mechanical device, comprising a mirror (M) fast with the mechanical device, a light source (S) and means for illuminating the mirror through an aperture (1) of predetermined width, a semi-conductor receiver (2) comprising an array of photosensitive elements, arranged for receiving the image of the aperture reflected by the mirror and deducing therefrom the angular position of the mechanical device by means of a data processing device, characterized in that the receiver comprises an array of photosensitive cells and a charge coupling device and means are provided for correcting the read out of the measurement provided by the receiver, comprising means (6, 7) for storing two addresses I and J provided by the receiver and corresponding to two elements of the receiver illuminated at two instants separated by an integrating time period Δt determined by the receiver, and a read-only memory (10) which can be addressed by the stored addresses I and J, said read-only memory (10) having been pre-programmed to supply the corrections of the appropriate parameters.

2. Registering system according to claim 1, characterized in that the photosensitive elements of the receiver are spaced apart by a distance depending on the width of said aperture (1).

3. Registering system according to one of claims 1 and 2, characterized in that the read-only memory (10) is preprogrammed to obviate the distortions introduced by the optics of the system.

4. Registering system according to one of claims 1 to 3, characterized in that the read-only memory (10) is preprogrammed to obviate the maximum angular speed limitation admissible for the receiver.

5. Registering system according to one of claims 1 to 4, characterized in that the read-only memory (10) is preprogrammed to obviate the non-linearity of the measurement due to the tangent effect.

6. Registering system according to one of claims 1 to 5, characterized in that said addresses I and J are coded by means of eight binary elements.

7. Registering system according to claim 6, characterized in that the address I of the first measurement is stored by means of its four binary elements of low weight and the address J of the second and last measurement is stored by means of its eight binary elements.

**Patentansprüche**

1. System zur Bestimmung der Winkelposition einer zu einer Drehbewegung anregbaren mechanischen Vorrichtung mit einem kraftschlüssig mit der mechanischen Vorrichtung verbundenen Spiegel (M), einer Lichtquelle (S) und Mitteln zum Beleuchten des Spiegels durch einen Spalt (1) vorgegebener Breite und einem Halbleiter-Empfänger (2), der einen Streifen von lichtempfindlichen Elementen aufweist, der so angeordnet ist, daß er das vom Spiegel reflektierte Bild des Spaltes empfängt und daraus durch Zwischenschaltung einer Vorrichtung zur Verarbeitung der Meßwerte die Winkelposition der mechanischen Vorrichtung ableitet, dadurch gekennzeichnet, daß der Empfänger einen Streifen von lichtempfindlichen Zellen und eine Vorrichtung zur Kopplung von Belastungen aufweist und Mittel zur Korrektur der vom Empfänger gelieferten Meßwertablesung vorgesehen sind, welche Mittel (6, 7) aufweisen zum Einspeichern von zwei Adressen I und J, die vom Empfänger geliefert werden und zwei Elementen des Empfängers entsprechen, die in zwei voneinander durch eine vom Empfänger bestimmte Integrationszeit getrennten Augenblicken beleuchtet werden, und einen durch die eingespeicherten Adressen I und J adressierbaren Festspeicher (10), wobei besagter Festspeicher (10) so vorprogrammiert ist, daß er die Korrekturen der angepaßten Parameter veranlaßt.

2. System zur Bestimmung nach Anspruch 1, dadurch gekennzeichnet, daß die lichtempfindlichen Elemente des Empfängers in Abständen angeordnet sind, deren Größe von der Breite besagten Spaltes (1) abhängig ist.

3. System zur Bestimmung nach einem der Ansprüche 1 und 2, dadurch gekennzeichnet, daß der Festspeicher (10) so vorprogrammiert ist, daß er die durch die Optik des Systems eingebrachten Verzerrungen aufhebt.

4. System zur Bestimmung nach einem der Ansprüche 1 bis 3, dadurch gekennzeichnet, daß der Festspeicher (10) so vorprogrammiert ist, daß er die Begrenzung der maximal für besagten Empfänger zulässigen Winkelgeschwindigkeit aufhebt.

5. System zur Bestimmung nach einem der Ansprüche 1 bis 4, dadurch gekennzeichnet, daß der Festspeicher (10) so vorprogrammiert ist, daß er die Nicht-Liniarität der Messung aufgrund des Tangenteneffektes aufhebt.

6. System zur Bestimmung nach einem der Ansprüche 1 bis 5, dadurch gekennzeichnet, daß die besagten Adressen I und J mit Hilfe von acht binären Elementen kodiert sind.

7. System zur Bestimmung nach Anspruch 6, dadurch gekennzeichnet, daß die Adresse I der ersten Messung aufgrund ihrer vier binären Elemente mit niedrigem Stellenwert in den Speicher gegeben wird und die Adresse J der zweiten und letzten Messung aufgrund ihrer acht binären Elemente in den Speicher gegeben wird.

Fig . 1 a .

Fig . 1 b .

Fig. 2.

Fig. 3 a.

Fig. 3 b.